# EUROPEAN PATENT APPLICATION

(11) **EP 4 147 859 A1**
(43) Date of publication of application: **15.03.2023**
(21) Application number: 22191558.0
(22) Date of filing: 22.08.2022
(51) Int. Cl.: B29C 64/30, B22F 10/43, B33Y 10/00, B33Y 40/00

(54) **ADDITIVE MANUFACTURING METHODS FEATURING ENHANCED PRINT BED ADHESION AND RELEASE**

(30) Priority: 10.09.2021 US 202117471358
(71) Applicant: Xerox Corporation, Webster, NY 14580 (US)
(72) Inventor: VANDEWINCKEL, Judith Millner, Livonia, 14487 (US); MERCANDETTI, Mark P, Victor, 14564 (US)
(74) Representative: Grünecker Patent- und Rechtsanwälte PartG mbB

(57) **Abstract**

A wax layer may be applied to a print bed to promote adhesion and release of a printed part during additive manufacturing. Additive manufacturing methods may comprise: depositing a wax layer comprising one or more waxes upon a print bed of an additive manufacturing apparatus, and forming a printed part upon the print bed through layer-by-layer deposition of a printing material. The printed parts may be released from the print bed once printing is complete, but without damaging the print bed.

## Description

### FIELD

The present disclosure generally relates to additive manufacturing and, more particularly, methods for improving adhesion and release of a printed part during additive manufacturing.

### BACKGROUND

Additive manufacturing, also known as three-dimensional (3D) printing, is a rapidly growing technology area. Although additive manufacturing has traditionally been used for rapid prototyping activities, this technique is being increasingly employed for producing commercial and industrial parts in any number of complex shapes. Additive manufacturing processes typically operate by building a part layer-by-layer, for example, by 1) depositing a stream of molten printing material obtained from a continuous filament or 2) sintering powder particulates of a printing material using a laser or other directed heating source. The layer-by-layer deposition usually takes place under control of a computer to deposit the printing material in precise locations based upon a digital three-dimensional "blueprint" of the part to be manufactured, with consolidation of the printing material taking place in conjunction with deposition to form the printed part. The printing material forming the body of a printed part may be referred to as a "build material" herein.

Additive manufacturing processes employing a stream of molten printing material for part formation are sometimes referred to as "fused deposition modeling" (FDM) or "fused filament fabrication" processes. Molten printing material is formed by heating a thermoplastic polymer filament, which is then deposited layer-by-layer and coalesced to form a consolidated part having a specified shape. Particle-based additive manufacturing techniques do not form a stream of molten printing material and may include, for example, Powder Bed Fusion (PBF), selective laser sintering (SLS), Electron Beam Melting (EBM), Binder Jetting and Multi-Jet Fusion (MJF), in which selected particulates within a powder bed undergo consolidation to form a printed part.

Additive manufacturing processes involve deposition of a printing material onto a printing platform, also referred to as a "print bed." In the case of fused filament fabrication, the printing material may be heated into a pliable or molten state, extruded through a nozzle and deposited upon the print bed to afford layer-by-layer formation of a printed part. Printing success and quality may depend upon there being adequate adhesion between the printed part and the print bed during deposition and, conversely, ready release of the printed part once deposition is complete. Unfortunately, good adhesion during deposition and ready release following printing are sometimes mutually exclusive and not realized in combination with one another, especially for certain combinations of printing materials (thermoplastic polymers) and materials forming a print bed. Glass print beds, for example, may chip when removing a printed part due to excessively strong surface adhesion. Excessively weak adhesion of the first few layers of a printed part, in contrast, may cause the printed part to shift, warp, or delaminate from the print bed, thereby resulting in a failed print or poor quality printed part. Print beds for fused filament fabrication are not considered to be consumable materials, and damage thereto may significantly increase upkeep costs of an additive manufacturing system. Failed or poor quality prints similarly may increase consumable printing material costs.

Materials, such as adhesive tapes (e.g., carpenter tape), may be applied to a print bed to facilitate deposition and release of a printed part. However, adhesive tapes themselves may be difficult to apply to a print bed in some cases, and they may leave behind residue material on a print bed once removed therefrom, which provides a further opportunity for print bed damage to occur. Moreover, adhesive tapes may not be universally applicable to a broad range of printing materials and conditions, and print bed materials. Other approaches for masking a print bed, such as treatment with hair spray or a glue stick, may exhibit similar shortcomings by leaving behind residue material on the print bed. At present, there is no universally applicable approach for promoting print bed adhesion and release.

### SUMMARY

In some embodiments, the present disclosure provides methods comprising: depositing a wax layer comprising one or more waxes upon a print bed of an additive manufacturing apparatus; and forming a printed part upon the print bed through layer-by-layer deposition of a printing material.

In other embodiments, the present disclosure provides methods comprising: providing a print bed having a wax layer thereon, the wax layer comprising one or more waxes; forming a printed part upon the print bed through layer-by-layer deposition of a printing material; and releasing the printed part from the print bed once forming is complete. Releasing the printed part occurs without damaging the print bed.

### BRIEF DESCRIPTION OF THE DRAWINGS

The following figures are included to illustrate certain aspects of the present disclosure, and should not be viewed as exclusive embodiments. The subject matter disclosed is capable of considerable modifications, alterations, combinations, and equivalents in form and function, as will occur to one having ordinary skill in the art and having the benefit of this disclosure.
FIG. 1 is a diagram of an illustrative fused filament fabrication process for producing a printed part using a build material and a removable support material.
FIG. 2 is a diagram of an illustrative printed part, in which a removable support is interposed between an overhang defined between the printed part and the print bed, and a removable support is interposed between two portions of the printed part.
FIG. 3 shows a scanning electron micrograph (SEM) image of wax particles deposited upon a glass print bed.

### DETAILED DESCRIPTION

The present disclosure generally relates to additive manufacturing and, more particularly, methods for improving adhesion and release of a printed part during additive manufacturing.

Additive manufacturing is a growing technology area that may utilize a variety of powder particulate and filament-based printing materials. As described above, sufficient adhesion of a printing material to a print bed and subsequent release of a printed part therefrom may be difficult to realize in some instances. Insufficient adhesion may result in poor print quality, and excessive adhesion following printing may result in print bed damage following release of a printed part, such as through chipping in the case of glass print bed materials. Adhesive tapes applied to a print bed may alleviate the foregoing problems to some degree, but there are still issues associated with these types of printing approaches. At present, there is not a simple solution that affords adequate adhesion and release of a printed part under a wide range of printing conditions.

The present disclosure demonstrates that additive manufacturing processes may be facilitated by depositing a wax layer upon a print bed prior to forming a printed part thereon. The wax layer may promote adhesion of the printed part during layer-by-layer deposition of a printing material while also affording release of the printed part once printing is complete. A wide range of low-cost waxes may be suitable to promote adhesion and release of a printed part in accordance with the foregoing. Without being bound by theory or mechanism, the wax layer is believed to provide an intermediate layer that is more amenable to thermal expansion and contraction during printing than is the print bed itself, thereby alleviating mechanical stress within the print bed and printed part. Moreover, because the wax layer is only weakly adhered to the print bed, it may be easily removed from the printed part and print bed following release of the printed part. That is, the wax layer may leave behind little or no residue upon the print bed following printing, and wax residue that does remain may be readily removed from the print bed *(e.g.,* through solvent treatment and/or mechanical removal, such as wiping). Without being bound by any theory or mechanism, it is believed that the wax layer may become incorporated within the first few layers of a printed part during printing material deposition, thus improving compatibility between the printed part and the print bed while not significantly altering the properties of the printed part. Incorporation of the wax layer within the first few layers of the printed part may be accomplished by depositing the printing material at or slightly above the melting point or softening temperature of the wax in the wax layer. Thus, the present disclosure provides a cost-effective and safe way to afford release of a printed part while also preventing print bed damage and limiting waste of consumable printing materials.

Advantageously, an aqueous wax emulsion comprising one or more waxes may be used to form the wax layer in order to improve print bed adhesion and to promote release of a printed part from a wide range of print bed materials. When deposited using an aqueous wax emulsion, the wax particles may form a uniform-thickness wax layer on the surface of the print bed. A number of aqueous wax emulsions are available from commercial suppliers, or a specified wax may be formulated into a wax emulsion, if desired. Foamed waxes may also be converted into a wax emulsion through dilution with water in some instances.

Terms used in the description and claims herein have their plain and ordinary meaning, except as modified by the description below.

As used herein, the term "thermoplastic polymer" refers to a polymer material that softens and hardens reversibly on heating and cooling. Thermoplastic polymers are inclusive of thermoplastic elastomers.

The melting point of a thermoplastic polymer, unless otherwise specified, is determined by ASTM E794-06(2018) with 10°C/min ramping and cooling rates.

The softening temperature or softening point of a thermoplastic polymer, unless otherwise specified, is determined by ASTM D6090-17. The softening temperature can be measured by using a cup and ball apparatus available from Mettler-Toledo using a 0.50 gram sample with a heating rate of 1°C/min.

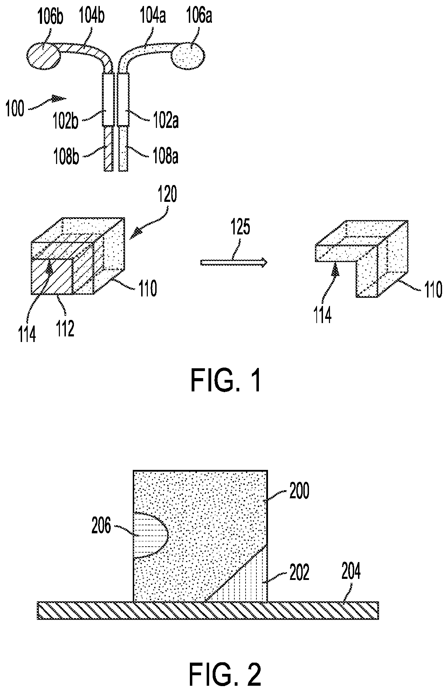

Before addressing various aspects of the present disclosure in further detail, a brief discussion of additive manufacturing processes, particularly fused filament fabrication processes, will first be provided so that the features of the present disclosure can be better understood. FIG. 1 shows a schematic of an illustrative fused filament fabrication process for producing a part using a build material and an optional removable support material. As shown in FIG. 1, print head 100 includes first extruder 102a and second extruder 102b, which are each configured to receive a filamentous (filament-based) printing material. Specifically, first extruder 102a is configured to receive first filament 104a from first payout reel 106a and provide molten stream 108a of a first printing material, and second extruder 102b, if used, is configured to receive second filament 104b from second payout reel 106b and provide molten stream 108b of a second printing material.

Both molten streams are initially deposited upon a print bed (not shown in FIG. 1) to promote layer-by-layer growth of supported part 120. The first printing material (build material) supplied by first extruder 102a may be a polymer used to fabricate printed part 110, and the second printing material (removable support material) supplied by second extruder 102b may be a dissolvable or degradable polymer *(e.g.,* a sacrificial material), which is used to fabricate removable support 112 under overhang 114. Overhang 114 is not in direct contact with the print bed or a lower printed layer formed from the build material. In the part arrangement shown in FIG. 1, removable support 112 is interposed between overhang 114 and the print bed, but it is to be appreciated that in alternatively configured parts, removable support 114 may be interposed between two or more portions of printed part 110. FIG. 2, for example, shows illustrative printed part 200, in which removable support 202 is interposed between an overhang defined between printed part 200 and print bed 204, and removable support 206 is interposed between two portions of printed part 200. In the disclosure herein, a wax layer (not shown in FIG. 2) may be interposed between printed part 200 and print bed 204.

Referring again to FIG. 1, once printing of printed part 110 and removable support 112 is complete, supported part 120 may be subjected to support removal conditions 125 that result in elimination of removable support 112 (*e.g.,* dissolution or disintegration conditions, or the like) and leave printed part 110 with overhang 114 unsupported thereon. Support removal conditions 125 may include, for example, contact of supported part 120 with a solvent or other liquid medium in which removable support 112 is dissolvable or degradable and printed part 110 is not. Removable support 112 may comprise a different thermoplastic polymer than does printed part 110 in order to support selective dissolution or degradation.

If a printed part is being formed without an overhang or similar feature, it is not necessary to utilize a removable support material during fabrication of the printed part. Similarly, two or more different build materials may be utilized as well, such as when one or more of the build materials is structural in nature and one or more of the build materials is functional in nature.

Accordingly, the present disclosure provides additive manufacturing methods comprising: providing a print bed having a wax layer thereon, in which the wax layer comprises one or more waxes; and forming a printed part upon the print bed through layer-by-layer deposition of a printing material. By utilizing the wax layer during printing and release of a printed part, damage to the print bed may be substantially avoided. The wax layer may be deposited upon the print bed from an aqueous wax emulsion, as described in further detail hereinafter. Alternately, the wax layer may be deposited upon the print bed from a wax stick, for example. Thus, some methods of the present disclosure may comprise depositing a wax layer comprising one or more waxes upon a print bed of an additive manufacturing apparatus, such as a wax layer deposited from an aqueous wax emulsion; and forming a printed part upon the print bed through layer-by-layer deposition of a printing material.

Deposition of an aqueous wax emulsion upon the print bed may be accomplished by any of a variety of techniques including spin coating, roller coating, painting, dip coating, spraying, and the like. The print bed may be below room temperature (about 25°C) when the wax emulsion is applied, or the print bed may be heated above room temperature during application of the wax emulsion and/or during removal of water from the wax emulsion to provide the wax layer. The print bed may be held at or below the melting point of the wax when depositing the wax layer.

The printing material may be filament-based. By way of non-limiting example, the additive manufacturing methods for forming the printed part may take place by fused filament fabrication or a similar process. Such processes may comprise providing a polymer filament, heating the polymer filament above a melting point or softening temperature thereof to form a softened or molten polymer material, and depositing the softened or molten polymer material layer by layer to form the printed part. The printing material may be deposited at an extrusion temperature above or below a melting point or softening temperature of the one or more waxes in the wax layer. When deposited at or above a melting point or softening temperature of the one or more waxes, the printing material may be extruded at a temperature up to about 5°C above, or up to about 10°C above, or up to about 20°C above, or up to about 30°C above, or up to about 40°C above, or up to about 50°C above, or up to about 60°C above, or up to about 70°C above, or up to about 80°C above, or up to about 90°C above, or up to about 100°C above the melting point or softening temperature of the one or more waxes in the wax layer. Even larger differentials between the extrusion temperature and the melting point or softening temperature of the one or more waxes may be suitable in some instances.

As described above, the wax layer applied to the print bed may facilitate release of a printed part therefrom. Accordingly, the methods of the present disclosure may comprise releasing the printed part from the print bed once formation of the printed part is complete. Releasing the printed part may occur without damaging the print bed, such as through chipping or warping. Techniques for promoting release of the printed part from the print bed are not believed to be especially limited. Sonication may be employed to promote release of the printed part, if needed. Once the printed part has been removed from the print bed, residual wax upon the print bed, if any, may be removed simply by wiping the print bed with a paper towel or cloth rag. Solvents may also be utilized to promote residual wax removal as well.

A wide range of waxes may be present in the wax layer in the disclosure herein. Waxes are hydrophobic organic substances that occur in petroleum or other oleaginous materials, are biosynthesized by plants and animals, or are obtained synthetically. Waxes are usually malleable solids at room temperature and may comprise one or more higher alkanes (paraffins), particularly normal or branched C₁₆-C₁₀₀ alkanes or C₂₀-C₅₀ alkanes, lipids and/or oils. Suitable waxes for use in the disclosure herein may include, but are not limited to, paraffin waxes, oxidized paraffin waxes, polyolefin waxes, oxidized polyolefin waxes, natural waxes, oxidized natural waxes, and any combination thereof. More specific examples are provided hereinafter. As used herein, a wax is considered "oxidized" if oxygenated functional groups such as alcohols, carboxylic acids, epoxides or the like are introduced to an otherwise unsubstituted (paraffinic) polymer backbone. The amount of oxygenated functional groups introduced to a particular wax may, for example, be sufficient to lower the hydrophobicity of the wax to an extent necessary to facilitate formation of an emulsified form of the wax. Wax particles may also be emulsified in the presence of a suitable surfactant, as described hereinafter. Suitable waxes may have a melting temperature (Tₘ) ranging from about 60°C to about 160°C, or about 65°C to about 155°C, or about 70°C to about 100°C, or about 75°C to about 95°C, or about 80°C to about 90°C.

More specific examples of waxes suitable for use in the disclosure herein may include, but are not limited to, slack wax, beeswax, hydrogenated lipids, refined wax, semi-refined wax, scale wax, microcrystalline wax, vegetable-based waxes such as soy and palm waxes, carnauba wax, rice bran wax, synthetic waxes such as oligomer waxes derived from linear alpha olefins, Fischer-Tropsch waxes, polyolefin waxes (*e.g.,* polyethylene wax or polypropylene wax), and any combination thereof. Paraffin waxes and Fischer-Tropsch waxes may be collectively referred to as polymethylene waxes in the disclosure herein. Polymethylene waxes may be distinguished from higher polyalkylene waxes (*e.g.,* polyethylene, polypropylene, and polybutylene waxes) by their lower molecular weights and lower extent of branching.

Examples of waxes that may be suitable include plant-based waxes, such as carnauba wax, rice wax, candelilla wax, sumac wax, and jojoba oil; animal-based waxes, such as beeswax; mineral-based waxes and petroleum-based waxes, such as montan wax, ozokerite, ceresin, paraffin wax, microcrystalline wax such as waxes derived from distillation of crude oil, silicone waxes, mercapto waxes, polyester waxes, urethane waxes; modified polyolefin waxes (such as carboxylic acid-terminated polyethylene or polypropylene wax); Fischer-Tropsch wax; ester waxes obtained from higher fatty acids and higher alcohols, such as stearyl stearate and behenyl behenate; ester waxes obtained from higher fatty acid and monovalent or multivalent lower alcohols, such as butyl stearate, propyl oleate, glycerol monostearate, glycerol distearate, and pentaerythritol tetra behenate; ester waxes obtained from higher fatty acid and multivalent alcohol multimers, such as diethylene glycol monostearate, dipropylene glycol distearate, diglyceryl distearate, and triglyceryl tetrastearate; sorbitan higher fatty acid ester waxes, such as sorbitan monostearate, and cholesterol higher fatty acid ester waxes, such as cholesteryl stearate.

In some embodiments, the wax layer and a wax emulsion used to deposit the wax layer may comprise at least one wax such as, for example, a Fischer-Tropsch wax, a paraffin wax, polymethylene wax, polyethylene wax, polypropylene wax, polybutylene wax, an ester wax (e.g., carnauba wax), any copolymer thereof, and any combination thereof.

Suitable polymethylene waxes may have a molecular weight (M_{w}), as measured by gel permeation chromatography, of about 400 daltons to about 1300 daltons, or about 450 daltons to about 1200 daltons, or about 500 daltons to about 1100 daltons. Cytech Q436B is an example polymethylene wax that may be suitable for use in the disclosure herein.

Functionalized waxes may also be suitable for use in the disclosure herein. Examples of suitable functionalized waxes include amine or amide functionalized waxes, for example Aqua SUPERSLIP 6550^{™}, SUPERSLIP 6530^{™} (available from Micro Powder Inc.), fluorinated waxes, such as POLYFLUO 190^{™}, POLYFLUO 200^{™}, POLYFLUO 523XF^{™}, AQUA POLYFLUO 41^{™}, AQUA POLYSILK 19^{™}, POLYSILK 14^{™} (available from Micro Powder Inc.), mixed fluorinated, amide waxes, such as MICROSPERSION 19^{™} (available from Micro Powder Inc.), imide waxes, ester waxes, quaternary amine waxes, carboxylic acid waxes, and acrylic polymer emulsions, such as JONCRYL 74^{™}, 89^{™}, 130^{™}, 537^{™}, and 538^{™} (all available from SC Johnson Wax), and chlorinated polypropylenes and polyethylene waxes (available from Allied Chemical and Petrolite Corporation and SC Johnson Wax).

A wide range of aqueous wax emulsions may be utilized to form the wax layer in the disclosure herein. Illustrative aqueous wax emulsions that may be suitable for use in the disclosure herein include those commercially available from Allied Chemical, Petrolite, Baker Hughes *(e.g.,* products D-1508 and D1479), IGI *(e.g.,* product D-1509), and Cytech Inc. *(e.g.,* product N-539 and Q-436). Other suitable wax emulsions that may be used in the disclosure herein include, but are not limited to, MICHEM^{®} emulsions such as ME62330, ME93335, ME61335, ME52137, and ME24414 (Michelman, Inc.).

The wax particles in the aqueous wax emulsion may have a particle size of about 1 micron or less, or about 800 nm or less, or about 600 nm or less, or about 400 nm or less, or about 300 nm or less, or about 200 nm or less, or about 100 nm or less. Illustrative wax particles that may be particularly suitable may have a size ranging from about 10 nm to about 100 nm, or about 25 nm to about 50 nm, or about 50 nm to about 90 nm, or about 20 nm to about 75 nm. Other examples of suitable wax particles within an aqueous wax emulsion may have a particle size of about 100 nm to about 500 nm, or about 125 nm to about 400 nm, or about 150 nm to about 300 nm, or about 150 nm to about 250 nm, or about 170 nm to about 270 nm.

Suitable wax emulsions may comprise up to about 50% wax by weight based on total solids loading in the wax emulsions, such as about 10% to about 50% wax by weight, or about 20 wt. % to about 45 wt. % wax, about 25 wt. % to about 40 wt. %, or about 30 wt. % to about 35 wt. %, or about 20 wt. % to about 30 wt. %, each based on total solids loading in the wax emulsions.

In some embodiments, a suitable wax emulsion may be obtained by combining a wax foam with water and dispersing the wax foam to form the wax emulsion. The wax foam may be obtained as a byproduct of another process in a non-limiting example.

The wax emulsions may comprise one or more surfactants. Suitable surfactants that may be present in the wax emulsions may include one or more cationic surfactants, one or more anionic surfactants, one or more neutral surfactants, one or more zwitterionic surfactants, or any combination thereof.

In some embodiments, at least one anionic surfactant may be present in the aqueous wax emulsions. Suitable anionic surfactants may include those having carboxylic acid, sulfonic acid, phosphonic acid, phosphinic acid, sulfate, or phosphate head groups, for example, that are coupled to a lipophilic tail. Examples include fatty alcohol ether sulfates, olefin sulfonates, and fatty acid salts. Other example anionic surfactants that may be suitable for use in the disclosure herein include, but are not limited to, alkyl ethoxylate sulfates, alkyl ethoxylate sulfonates, alkylphenol ethoxylate sulfates, alkylphenol ethoxylate sulfonates, alkylsulfates, alkylsulfonates, alkylarylsulfates, alkylarylsulfonates, and sulfosuccinates. In some embodiments, the aqueous wax emulsions may comprise sodium dodecylbenzene sulfonate as an anionic surfactant, such as TAYCAPOWERBN2060 (Tayca Corporation). Up to about 5% surfactant may be present in the aqueous wax emulsions, based on total solids loading. In more specific examples, the aqueous wax emulsions may comprise about 0.1% surfactant to about 3% surfactant by weight, or about 0.5% to about 1.5% surfactant by weight, based on total solids loading in the aqueous wax emulsions.

When an aqueous wax emulsion is deposited to form a wax layer upon the print bed, the aqueous wax emulsion may be dried at ambient temperature or at a temperature above ambient temperature to remove water. The temperature at which the aqueous wax emulsion is dried to form the wax layer may be above or below the melting point of the wax. Drying may be further promoted by reduced pressure, gas flow, or any combination thereof.

The material comprising the print bed is not believed to be particularly limited. In non-limiting examples, the print bed may comprise metal, glass, wood, plastic, rubber, or any composite or blend thereof. In a particular example, the print bed may comprise a glass surface.

Suitable printing materials may comprise a thermoplastic polymer. Illustrative examples of suitable thermoplastic polymers may be used in the present disclosure include those commonly employed in fused filament fabrication such as, for instance, a polyamide, a polycaprolactone, a polylactic acid, a poly(styrene-isoprene-styrene) (SIS), a poly(styrene-ethylene-butylene-styrene) (SEBS), a poly(styrene-butylene-styrene) (SBS), a high-impact polystyrene (HIPS), polystyrene, a thermoplastic polyurethane, a poly(acrylonitrile-butadiene-styrene) (ABS), a polymethylmethacrylate, a poly(vinylpyrrolidine-vinylacetate), a polyester, a polycarbonate, a polyethersulfone, a polyoxymethylene, a polyether ether ketone, a polyetherimide, a polyethylene, a polyethylene oxide, a polyphenylene sulfide, a polypropylene, a polystyrene, a polyvinyl chloride, a poly(tetrafluoroethylene), a poly(vinylidene fluoride), a poly(vinylidene fluoride-hexafluoropropylene), polyvinylpyrrolidone-co-polyvinyl acetate (PVP-co-PVA), any copolymer thereof, and any combination thereof. In particular examples, the printing material may comprise poly(acrylonitrile-butadiene-styrene) (ABS) or polylactic acid (PLA). These polymers may be compatibilized with a glass print bed through implementation of the disclosure herein.

Examples of printed parts that may be formed using the methods of the present disclosure include, but are not limited to, containers (e.g., for food, beverages, cosmetics, personal care compositions, medicine, and the like), shoe soles, toys, furniture parts and decorative home goods, plastic gears, screws, nuts, bolts, cable ties, automotive parts, medical items, prosthetics, orthopedic implants, aerospace/aircraft-related parts, production of artifacts that aid learning in education, 3-D anatomy models to aid in surgeries, robotics, biomedical devices (orthotics), home appliances, dentistry, electronics, sporting goods, and the like.

Embodiments disclosed herein include:
A. Additive manufacturing methods including deposition of a wax layer upon a print bed. The methods comprise: depositing a wax layer comprising one or more waxes upon a print bed of an additive manufacturing apparatus; and forming a printed part upon the print bed through layer-by-layer deposition of a printing material.
B. Additive manufacturing methods including a wax layer to promote release of a printed part. The methods comprise: providing a print bed having a wax layer thereon, the wax layer comprising one or more waxes; forming a printed part upon the print bed through layer-by-layer deposition of a printing material; and releasing the printed part from the print bed once forming is complete; wherein releasing the printed part occurs without damaging the print bed.

Each of embodiments A and B may have one or more of the following additional elements in any combination:
Element 1: wherein the wax layer is deposited from an aqueous wax emulsion.
Element 2: wherein the aqueous wax emulsion comprises up to about 50 wt. % wax solids.
Element 3: wherein the aqueous wax emulsion has a wax particle size ranging from about 150 nm to about 300 nm.
Element 4: wherein the method further comprises: once deposited, drying the aqueous wax emulsion to form the wax layer.
Element 5: wherein the wax layer comprises at least one wax selected from the group consisting of Fischer-Tropsch wax, paraffin wax, polymethylene wax, polyethylene wax, polypropylene wax, polybutylene wax, an ester wax, any copolymer thereof, and any combination thereof.
Element 6: wherein the one or more waxes have a melting point ranging from about 70°C to about 100°C.
Element 7: wherein the printing material is deposited at or above a melting point of the one or more waxes.
Element 8: wherein the print bed comprises a material selected from the group consisting of metal, glass, wood, plastic, rubber, and any composite thereof.
Element 9: wherein the print bed comprises a glass surface.
Element 10: wherein the printing material comprises acrylonitrile-butadiene-styrene polymer (ABS) or polylactic acid (PLA).
Element 11: wherein the printing material is filament-based.
Element 12: wherein the method further comprises: releasing the printed part from the print bed once forming is complete; wherein releasing the printed part occurs without damaging the print bed.

By way of non-limiting example, exemplary combinations applicable to A include, but are not limited to: 1 and 2; 1 and 3; 1-3; 1, 2 and/or 3, and 4; 1, 2 and/or 3, and 5; 1, 2 and/or 3, and 6; 1, 2 and/or 3, and 7; 1, 2 and/or 3, and 8; 1, 2 and/or 3, and 9; 1, 2 and/or 3, and 10; 1, 2 and/or 3, and 11; 1, 2 and/or 3, and 12; 4 and 5; 4 and 6; 4 and 7; 4 and 8; 4 and 9; 4 and 10; 4 and 11; 4 and 12; 5 and 6; 5 and 7; 5 and 8; 5 and 9; 5 and 10; 5 and 11; 5 and 12; 6 and 7; 6 and 8; 6 and 9; 6 and 10; 6 and 11; 6 and 12; 7 and 8; 7 and 9; 7 and 10; 7 and 11; 7 and 12; 8 and 9; 8 and 10; 8 and 11; 8 and 12; 9 and 10; 9 and 11; 9 and 12; 10 and 11; 10 and 12; and 11 and 12.

To facilitate a better understanding of the present disclosure, the following examples of preferred or representative embodiments are given. In no way should the following examples be read to limit, or to define, the scope of the invention.

### Examples

**Example 1.** An aqueous polymethylene wax emulsion having a solids content of about 30 wt. %, based on the total solids, was prepared at room temperature and applied to a glass print bed in a fused filament fabrication 3-D printing system (FlashForge ADVENTURER 3). The wax had a melting point (Tm) of about 89°C to about 93°C. The aqueous emulsion was air dried prior to printing the first layer on the print bed using an ABS polymer filament. Printing was conducted at 100% infill with a print bed temperature of 60-100°C and an extruder temperature of 200-215°C.

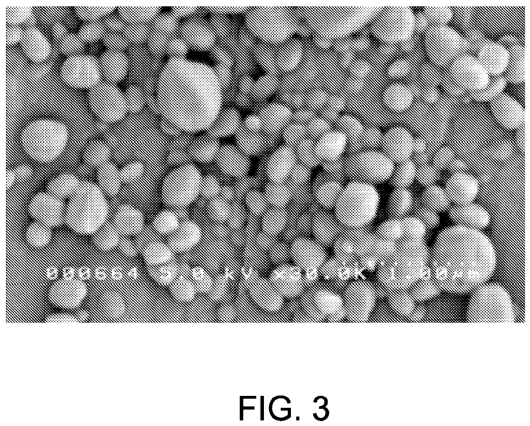

FIG. 3 shows a scanning electron micrograph (SEM) image of wax particles deposited upon a glass print bed. A consistent bonding surface for printing was obtained. Following printing, ready removal of the printed part was realized. No damage to the print bed or printed part was observed.

All documents described herein are incorporated by reference herein for purposes of all jurisdictions where such practice is allowed, including any priority documents and/or testing procedures to the extent they are not inconsistent with this text. As is apparent from the foregoing general description and the specific embodiments, while forms of the disclosure have been illustrated and described, various modifications can be made without departing from the spirit and scope of the disclosure. Accordingly, it is not intended that the disclosure be limited thereby. For example, the compositions described herein may be free of any component, or composition not expressly recited or disclosed herein. Any method may lack any step not recited or disclosed herein. Likewise, the term "comprising" is considered synonymous with the term "including." Whenever a method, composition, element or group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

One or more illustrative embodiments are presented herein. Not all features of a physical implementation are described or shown in this application for the sake of clarity. It is understood that in the development of a physical embodiment of the present disclosure, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for one of ordinary skill in the art and having benefit of this disclosure.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to one having ordinary skill in the art and having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. The embodiments illustratively disclosed herein suitably may be practiced in the absence of any element that is not specifically disclosed herein and/or any optional element disclosed herein.

## Claims

1. A method comprising:
depositing a wax layer comprising one or more waxes upon a print bed of an additive manufacturing apparatus; and
forming a printed part upon the print bed through layer-by-layer deposition of a printing material.

2. The method of claim 1, wherein the wax layer is deposited from an aqueous wax emulsion.

3. The method of claim 2, wherein the aqueous wax emulsion comprises up to about 50 wt. % wax solids.

4. The method of claim 2, wherein the aqueous wax emulsion has a wax particle size ranging from about 150 nm to about 300 nm.

5. The method of claim 2, further comprising:
once deposited, drying the aqueous wax emulsion to form the wax layer.

6. The method of claim 1, wherein the wax layer comprises at least one wax selected from the group consisting of Fischer-Tropsch wax, paraffin wax, polymethylene wax, polyethylene wax, polypropylene wax, polybutylene wax, an ester wax, any copolymer thereof, and any combination thereof.

7. The method of claim 1, wherein the one or more waxes have a melting point ranging from about 70°C to about 100°C.

8. The method of claim 1, wherein the printing material is deposited at or above a melting point of the one or more waxes.

9. The method of claim 1, wherein the print bed comprises a material selected from the group consisting of metal, glass, wood, plastic, rubber, and any composite thereof.

10. The method of claim 1, wherein the printing material comprises acrylonitrile-butadiene-styrene polymer (ABS) or polylactic acid (PLA).

11. The method of claim 1, wherein the print bed comprises a glass surface.

12. The method of claim 1, wherein the printing material is filament-based.

13. The method of claim 1, further comprising:
releasing the printed part from the print bed once forming is complete;
wherein releasing the printed part occurs without damaging the print bed.

14. A method comprising:
providing a print bed having a wax layer thereon, the wax layer comprising one or more waxes;
forming a printed part upon the print bed through layer-by-layer deposition of a printing material; and
releasing the printed part from the print bed once forming is complete;|
wherein releasing the printed part occurs without damaging the print bed.

15. The method of claim 14, wherein the wax layer comprises at least one wax selected from the group consisting of Fischer-Tropsch wax, paraffin wax, polymethylene wax, polyethylene wax, polypropylene wax, polybutylene wax, an ester wax, any copolymer thereof, and any combination thereof.

16. The method of claim 14, wherein the one or more waxes have a melting point ranging from about 70°C to about 100°C.

17. The method of claim 14, wherein the printing material is deposited at or above a melting point of the one or more waxes.

18. The method of claim 14, wherein the print bed comprises a material selected from the group consisting of metal, glass, wood, plastic, rubber, and any composite thereof.

19. The method of claim 14, wherein the printing material comprises acrylonitrile-butadiene-styrene polymer (ABS) or polylactic acid (PLA).

20. The method of claim 14, wherein the wax layer is deposited from a wax emulsion.
